(19) Europäisches Patentamt
European Patent Office
Office européen des brevets

(11) Numéro de publication : 0 501 865 A1

(12) **DEMANDE DE BREVET EUROPEEN**

(21) Numéro de dépôt : **92400469.0**

(51) Int. Cl.$^5$ : **C08F 8/48**

(22) Date de dépôt : **24.02.92**

(30) Priorité : **25.02.91 FR 9102217**

(43) Date de publication de la demande :
**02.09.92 Bulletin 92/36**

(84) Etats contractants désignés :
**AT BE CH DE DK ES FR GB GR IT LI LU MC NL PT SE**

(71) Demandeur : **ACOME**
**52, Rue du Montparnasse**
**F-75014 Paris (FR)**

(72) Inventeur : **Levesque, Guy**
**52 Rue des Tilleuls**
**F-14000 Caen (FR)**
Inventeur : **Jouannet, Denis**
**4 Route de Periers**
**F-50500 Carentan (FR)**
Inventeur : **Goblot, Jean-Yves**
**16 Rue du Pont Bossard, Le Neufbourg**
**F-50140 Mortain (FR)**
Inventeur : **Gillot, Chantal**
**Les Cersiers**
**F-50140 Notre Dame du Touchet (FR)**

(74) Mandataire : **Boulinguiez, Didier et al**
**Cabinet Plasseraud, 84, rue d'Amsterdam**
**F-75009 Paris (FR)**

(54) **Procédé de fabrication de matériau thermoplastique, matériau thermoplastique obtenu et son utilisation comme matériau transparent résistant à haute température.**

(57) L'invention concerne un procédé de fabrication de matériau thermoplastique ayant une température de transition vitreuse élevée, ce procédé étant caractérisé par le fait que l'on prépare un polymère de départ présentant, parmi ses motifs constitutifs des motifs anhydrides, que l'on fait réagir une quantité suffisante d'amine primaire ou d'un mélange d'amines primaires pour que les motifs anhydrides soient transformés au moins en partie en motifs acide-amide, et que l'on effectue la cyclisation du polyacide-amide obtenu. Le matériau thermoplastique obtenu peut servir notamment à la constitution de fibres optiques résistantes aux hautes températures.

EP 0 501 865 A1

L'invention a pour objet un procédé de fabrication de matériau thermoplastique ayant une température de transition vitreuse élevée. Elle vise également le matériau thermoplastique susceptible d'être obtenu par le procédé conforme à l'invention, ainsi que l'utilisation du matériau thermoplastique obtenu par ce procédé pour la constitution de fibres optiques.

Du fait de leurs propriétés spécifiques, les fibres optiques silices ou plastiques concurrencent de plus en plus les traditionnels câbles de cuivre pour le transport d'informations dans le domaine des télécommunications.

Les fibres optiques silices (FOS) sont douées d'une excellente capacité de transmission et sont utilisées industriellement pour des applications dans les communications à haut débit, sur de longues distances. Mais du fait de leurs faibles propriétés mécaniques, notamment la flexibilité, leur mise en oeuvre reste délicate, rendant leur fabrication et leur pose très coûteuses.

Les fibres optiques plastiques (FOP) présentent, quant à elles, du fait de leur plus forte atténuation, des capacités de transmission plus faibles. En revanche, leurs excellentes propriétés mécaniques rendent leur production plus aisée et moins onéreuse. Elles sont de plus en plus utilisées pour les transmissions de données sur de courtes distances, c'est-à-dire jusqu'à environ 200 mètres. Ces fibres sont constituées d'un polymère de coeur, généralement en polyméthacrylate de méthyle (PMMA) ou en polystyrène (PS), autour duquel est déposé un polymère de gaine, généralement constitué de polymère ou copolymère fluoré ou fluoropolymère.

Les polymères de coeur (PMMA, PS) très purs ont de bonnes transparences, ainsi que de bonnes propriétés mécaniques, mais malheureusement leurs températures de transition vitreuse (Tg), qui varient de 100 à 105°C environ, limitent leur utilisation à des températures inférieures à environ 80°C.

Ceci est d'autant plus fâcheux qu'il existe un important marché potentiel pour des fibres optiques plastiques qui seraient résistantes à de plus hautes températures. En particulier une demande importante existe dans le domaine de l'automobile et le domaine de l'aérospatiale où les systèmes de transmission de données doivent présenter des performances de tenue en température de 1000 heures à 125°C pour l'automobile, et de 1000 heures à plus de 140°C pour l'aérospatiale.

Ceci explique que des recherches très actives sont actuellement entreprises en vue de la fabrication de fibres optiques présentant une bonne résistance aux hautes températures.

Une première voie de recherche consiste en la réalisation de polymères de condensation présentant une bonne transparence et une haute température de transition vitreuse.

Les polymères les plus étudiés sont les polycarbonates qui possèdent de hautes températures de transition vitreuse, aux alentours de 150°C. Mais ils présentent cependant de fortes atténuations et un vieillissement trop important aux hautes températures. Ceci est généralement dû à la difficulté d'éliminer les sous-produits formés lors de la réaction, ou à la décomposition même du polymère, ces deux causes entraînant une coloration indésirable de la fibre optique.

Une seconde voie de recherche consiste en la copolymérisation ou la terpolymérisation de polyesters méthacryliques ayant des groupes alkyles volumineux, avec d'autres méthacrylates (MMA).

La température de transition vitreuse du matériau est alors augmentée par la présence de groupements latéraux volumineux et rigides au voisinage immédiat de la chaîne. Ces matériaux présentent la formule générale suivante :

$$\begin{array}{c} \qquad\quad CH_3 \\ A{-}R{-}O{-}C{-}C{=}CH_2 \\ O \qquad\quad \end{array}$$

où A représente un groupement alicyclique hydrocarboné et R un groupement alkyle.

Ils ont l'avantage de pouvoir être polymérisés en masse, sans formation de sous-produits. Les monomères servant à la préparation de ces matériaux sont des acrylates ou méthacrylates de bornyle, norbornyle, menthyle, fenchyle, adamantyle ou de cyclanes divers.

Les polymères obtenus ont des températures de transition vitreuse Tg moyennement élevées, car limitées au Tg de l'homopolymère comportant uniquement la structure encombrée. L'encombrement imposé par de tels groupes latéraux peut rendre la polymérisation laborieuse, et il peut être difficile d'obtenir de hautes masses moléculaires.

Les propriétés mécaniques de ces matériaux sont rarement satisfaisantes, ainsi d'ailleurs que leur vieillissement aux hautes températures, car il est probable que les groupements latéraux en question ont tendance à se décomposer (décomposition thermique des esters en acides carboxyliques et alcènes).

Une troisième voie de recherche consiste à effectuer, après la polymérisation des acrylates ou des méthacrylates, une réticulation intermoléculaire ou une cyclisation des fonctions méthacrylates en présence d'amines

ou en présence de composés réactifs équivalents. On peut citer par exemple l'imidation du polyméthacrylate de méthyle par une amine primaire, ce qui donne naissance à un polyimide méthacrylique présentant la formule générale suivante :

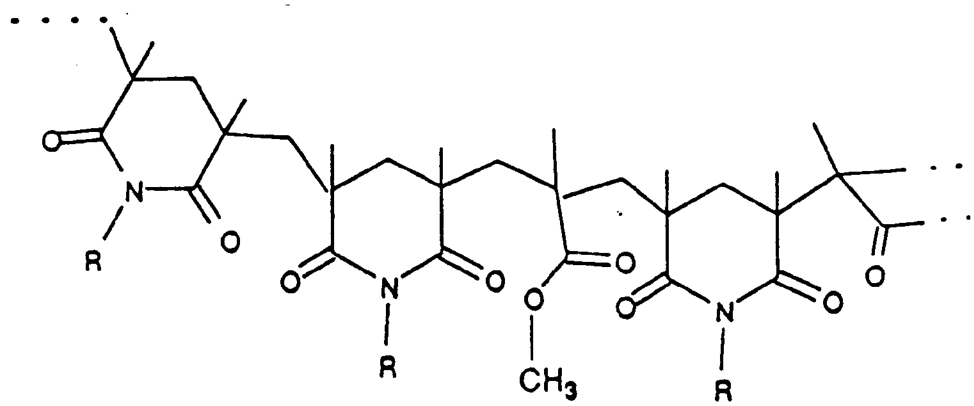

Ce type de modification est généralement difficilement controlable et provoque l'apparition de sous-produits entraînant une coloration néfaste du matériau et lui conférant une mauvaise capacité de transmission optique.

Enfin, une autre démarche consiste à effectuer la copolymérisation ou la terpolymérisation d'acrylates, de méthacrylates ou de composés vinyliques avec les maléïmides.

De la même famille que l'anhydride maléïque, les N-alkyl ou N-aryl maléimides sont des composés cycliques à 5 atomes, présentant une double liaison et donc susceptibles de se polymériser, ou de se copolymériser avec d'autres monomères. Leur formule générale est la suivante :

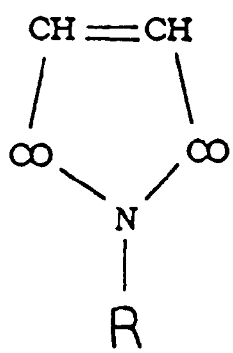

L'introduction de telles molécules dans la chaîne principale d'un polymère augmente considérablement la rigidité de la structure moléculaire, accroissant ainsi sa tenue en température.

Diverses études ont déjà été effectuées sur la polymérisation de ces produits avec des acrylates, des méthacrylates ou des composés styréniques. On trouve ainsi dans la littérature un certain nombre de brevets, généralement d'origine japonaise ou américaine, revendiquant l'emploi de tels monomères pour la mise au point de matériaux optiques résistant à de hautes températures. On peut ainsi citer notamment :

– la copolymérisation de N-aryl maléïmide avec le méthacrylate de méthyle (demande de brevet japonais n° 61,147,203),

– la copolymérisation de styrène et de N-alkyl ou de N-aryl maléimide pour la réalisation de substrats pour disques optiques se déformant à des températures de l'ordre de 150°C (demande de brevet japonais n° 61,278,509),

– la polymérisation de N-cyclohexylmaléimide avec du méthacrylate de méthyle et des monomères vinyliques aromatiques (styrène, α-méthylstyrène) pour la réalisation d'un polymère de gaine pour une fibre optique à coeur en polycarbonate (demande de brevet japonais n° 63,74,007),

– la copolymérisation de N-isopropylmaléimide avec le méthacrylate de méthyle pour la production de fibres optiques résistantes aux hautes températures (demande de brevet japonais n° 63,89,806),

– la polymérisation de N-alkylmaléimide avec du méthacrylate de méthyle et/ou du styrène, conduisant à des polymères de qualité optique possédant des Tg variant de 135°C à 146°C, utilisés pour le coeur de

fibres optiques (US Patent n° 4,810,055 ou EP n° 0 269 223).

Ces différents brevets ou demandes de brevet montrent tout l'intérêt porté à l'utilisation de ces monomères pour la réalisation de fibres optiques présentant une bonne résistance aux hautes températures. Mais la synthèse et la purification des monomères s'avèrent difficiles et augmentent par conséquent de façon considérable le coût de production des polymères finaux.

L'invention a pour objet de remédier à ces difficultés et de proposer un nouveau procédé de fabrication de matériau thermoplastique de température de transition vitreuse élevée, ce procédé permettant en outre de faire varier très facilement les propriétés finales du matériau thermoplastique. Ce procédé permet de fabriquer facilement et économiquement des matériaux organiques de qualité optique présentant des températures de transition vitreuse Tg pouvant s'échelonner entre des températures d'environ 100°C et des températures supérieures à 200°C, pouvant atteindre 250°C environ.

Selon l'invention, le procédé de fabrication de matériau thermoplastique de température de transition vitreuse élevée est caractérisé par le fait que l'on prépare un polymère de départ présentant, parmi ses motifs constitutifs, des motifs anhydrides, que l'on fait réagir une quantité suffisante d'amines primaires ou d'un mélange d'amines primaires pour que les motifs anhydrides soient transformés au moins en partie en motifs acide-amide, et que l'on effectue la cyclisation du polyacide-amide obtenu.

Le procédé de fabrication conforme à l'invention comporte donc trois étapes consistant en :

a) la réalisation d'un polymère de départ possédant, parmi ses motifs constitutifs, des motifs anhydrides et pouvant supporter une modification chimique ou thermique sans dégradation sensible;

b) la modification chimique quantitative des motifs anhydrides comportés par le polymère de départ, par une amine primaire ou un mélange d'amines primaires, la sélection de l'amine ou des amines en question étant effectuée en fonction des propriétés désirées du matériau final;

c) la cyclisation, chimique ou thermique, du poly(acide-amide) ainsi obtenu.

De préférence, le polymère de départ est à base d'anhydride maléique, et plus préférentiellement encore il est constitué d'un copolymère d'anhydride maléique et d'ester acrylique ou méthacrylique, éventuellement fluoré ou chloré, ou d'un copolymère d'anhydride maléique et de monomère vinylique tel que le styrène ou ses dérivés. Il peut également s'agir d'un terpolymère d'anhydride maléique, d'ester acrylique ou méthacrylique, éventuellement fluoré ou chloré, et de monomère vinylique dont notamment le styrène et ses dérivés comme l'$\alpha$-méthylstyrène. Les proportions entre l'anhydride maléique et les autres comonomères éventuellement présents, comme les esters acryliques ou méthacryliques ou les composés vinyliques, sont choisies en fonction des propriétés recherchées pour le matériau final. De façon générale, l'anhydride maléïque est présent dans le polymère de départ en une proportion supérieure à 5 %,et de préférence supérieure à 10 %.

L'amine utilisée pour réagir avec les motifs anhydrides comportés par le polymère de départ est une amine primaire ou un mélange d'amines primaires. On peut faire appel à tout type d'amine, mais de préférence on fait appel à une amine substituée ou à un mélange d'amines primaires comprenant au moins une amine substituée. On peut ainsi faire appel à des alkylamines et/ou des arylamines, parmi lesquelles on peut citer notamment la méthylamine, l'éthylamine, l'isopropylamine, la n-butylamine, la t-butylamine, la cyclohexylamine, l'aniline et ses dérivés, la chloro-2-éthylamine, la néo-pentylamine.

L'utilisation de diamines telles que l'éthylènediamine, le diamino-1-2 propane, le diamino-1-3 propane, le diamino-1-4 butane, le diamino-1-4 hexane, ou de diamines aromatiques, permet d'augmenter la masse moléculaire du copolymère utilisé, voire d'assurer sa réticulation.

La nature du groupement alkyle ou du groupement aryle de l'amine primaire utilisée ou la proportion respective des différentes amines utilisées dans le mélange d'amines ajouté au polymère de départ exerceront également une influence directe sur la température de transition vitreuse du matériau final obtenu. Ainsi, par exemple, la cyclohexylamine donne, pour un même polymère de départ, des valeurs de Tg plus élevées que l'isopropylamine, en raison essentiellement de l'encombrement plus grand du cycle cyclohexyle. En revanche, la n-butylamine, qui possède une chaine linéaire longue, donc mobile, conduit à une Tg du matériau final plus faible.

La faculté de pouvoir régler ou choisir les propriétés, dont notamment la température de transition vitreuse, du matériau final, en faisant varier séparément ou à la fois la nature et les proportions en monomères du polymère de départ, ou la nature et la proportion des amines primaires ajoutées, représente un des avantages essentiels du procédé conforme à l'invention.

De façon générale, la quantité d'amines primaires ou du mélange d'amines primaires ajoutée au polymère de départ est suffisante pour qu'au moins environ 25 %, de préférence au moins 50 %, et plus préférentiellement au moins 75 % des motifs anhydrides soient transformés en motifs acide-amide.

En ce qui concerne la cyclisation du polymère obtenu comportant les motifs acide-amide, elle peut être effectuée soit par voie chimique, soit par voie thermique.

Selon un premier mode de réalisation, cette cyclisation est effectuée par voie chimique, le polymère obtenu

après réaction avec l'amine étant traité, avantageusement en phase solvant, en présence d'un agent déshydratant.

De préférence, on fait appel en tant qu'agent déshydratant à un chlorure d'acide ou à un anhydride d'acide. De préférence, pour les applications optiques, on fait appel au chlorure d'oxalyle. Ce dernier est en effet très réactif et permet de substituer le groupement-OH de la fonction acide par un atome de chlore, le chlorure d'acide ainsi formé, plus réactif que l'acide, réagissant rapidement avec l'hydrogène du groupement amide voisin pour former quantitativement le cycle imide. De plus, ce réactif présente l'avantage de se décomposer lors de la réaction en acide chlorhydrique, en oxyde de carbone et en gaz carbonique, ce qui fait que peu d'impuretés résiduelles sont présentes dans le milieu réactionnel.

L'addition de l'agent déshydratant peut être effectuée sur le polymère laissé en suspension dans un solvant tel que le benzène, le toluène, le cyclohexane, des dérivés ou le mélange de ces solvants, l'addition s'effectuant à température ambiante ou à 30-40°C environ. Le milieu réactionnel est ensuite porté à une température plus élevée pendant un temps suffisant pour que la cyclisation puisse se réaliser. Avec le chlorure d'oxalyle, la réaction est ainsi effectuée à une température supérieure à 60°C, de préférence de l'ordre de 80°C, pendant une durée de quelques heures. Au cours de la réaction, le polymère se redissout, et il est donc nécessaire en fin de manipulation de concentrer la solution avant de reprécipiter le polymère obtenu dans le méthanol ou l'éthanol, ou dans un autre non-solvant du polymère.

Selon un deuxième mode de réalisation, la cyclisation est effectuée par voie thermique. Cette méthode, simple et rapide, est préférée, car elle permet d'obtenir un polymère final contenant un minimum d'impuretés et directement exploitable pour la réalisation de matériaux thermoplastiques.

Ainsi, le polymère obtenu après réaction avec l'amine ou les amines primaires est isolé puis soumis à un traitement thermique, celui-ci pouvant être réalisé dans une enceinte fermée dans laquelle circule un flux d'azote exempt de traces d'eau afin d'éviter la reformation de cycles anhydrides. Les conditions de déshydratation ou de cyclisation dépendent bien sûr de l'amine utilisée pour la modification du polymère. Mais en règle générale, un traitement thermique réalisé à une température comprise entre 160 et 300°C, et de préférence entre 200 et 250°C, pendant un temps pouvant varier d'environ 5 minutes à quelques heures, est suffisant pour procéder à la cyclisation.

Des études réalisées tant en calorimétrie différentielle qu'en spectrométrie infrarouge ont montré que les cycles imides formés peuvent en effet subir sans aucune altération du spectre infrarouge, donc sans altération du matériau, des températures voisines de 300°C.

Le contrôle du produit final peut être réalisé par enregistrement du spectre infrarouge, ou du spectre RMN du carbone 13. La détermination de la température de transition vitreuse Tg est, quant à elle, réalisée par calorimétrie différentielle.

Le procédé selon l'invention conduit à l'obtention de toute une gamme de polymères nouveaux, présentant dans leur structure des motifs dérivés des esters acryliques ou méthacryliques et/ou des motifs vinyliques, des cycles anhydrides à 5 atomes de carbone, des N-alkyl ou N-aryl imides à 5 atomes dans le cycle. En outre, grâce au procédé de préparation conforme à l'invention, les polymères finaux obtenus sont pratiquement exempts de monomères difficilement éliminables comme les maléimides. En cela également, les polymères susceptibles d'être obtenus par le procédé selon l'invention se différencient très nettement des polymères de structure approchante obtenus par polymérisation directe des monomères correspondants.

Un intérêt essentiel du procédé conforme à l'invention réside dans la possibilité d'utiliser un mélange d'amines, alors que par polymérisation directe, il faudrait pouvoir disposer de tous les maléimides correspondants.

Les polymères obtenus à l'aide du procédé conforme à l'invention peuvent être utilisés comme matériaux de revêtement ou d'enrobage, notamment dans les industries électroniques, comme matériaux support, ou comme matériaux optiques, notamment comme matériaux constitutifs de fibres optiques, aussi bien pour la gaine que pour le coeur.

L'invention pourra être mieux comprise à l'aide des exemples qui suivent, donnés à titre purement illustratif.

## EXEMPLE 1

Cet exemple est relatif à un matériau plastique fabriqué à partir d'un copolymère 50/50 styrène-anhydride maléique.

La première étape consiste tout d'abord à réaliser la copolymérisation en solution du mélange 50/50 de styrène et d'anhydride maléique, la réaction s'effectuant dans le toluène.

Ainsi, dans un réacteur de 500 ml muni d'une agitation mécanique, d'un réfrigérant à reflux, d'un thermomètre, et d'une arrivée d'azote, on introduit 300 cm3 de toluène que l'on sature d'azote pendant 1 heure. Puis on ajoute 10,4 g de styrène, 9,8 g d'anhydride maléique et 0,1 g de peroxyde de benzoyle. On agite le tout à température ambiante jusqu'à ce que la solution devienne claire. On chauffe ensuite à une température de

100°C pendant 5 heures sous agitation mécanique.

Le polymère, insoluble dans le toluène, précipite lors de la polymérisation. Le milieu est ensuite refroidi à température ambiante et filtré sur un fritté de porosité n° 4. Le polymère, qui se présente alors sous l'aspect d'une poudre blanche, est ensuite séché sous vide jusqu'à masse constante, et il est analysé en infrarouge et en RMN, ainsi qu'en analyse calorimétrique différentielle.

Le diagramme thermique montre la présence d'une seule température de transition vitreuse située à 209°C.

Dans une deuxième étape, le copolymère formé est alors traité avec de la cyclohexylamine. Ainsi 3 g de polymère sont dispersés dans 5 cm3 de toluène, et la suspension est portée à 80°C. On ajoute ensuite 1,77 g de cyclohexylamine dissous dans 15 cm3 de toluène,à l'aide d'une ampoule d'addition. La réaction a lieu pendant 5 heures, puis on laisse refroidir le milieu jusqu'à la température ambiante.

Le polymère blanc obtenu est filtré sur fritté de porosité 4. La poudre blanche recueillie est alors séchée jusqu'à masse constante puis est analysée en infrarouge, RMN et DSC.

Le spectre infrarouge indique l'apparition de bandes amides secondaires.

Le thermogramme DSC révèle la présence d'une seule température de transition vitreuse, située à 203°C. On procède alors à la cyclisation par deux méthodes différentes.

Première méthode

On procède à la cyclisation par deshydratation du polymère acide-amide obtenu à l'aide d'anhydride acétique et d'acétate de sodium.

1 g de polymère est introduit dans un ballon de 50 cm3 muni d'un agitateur magnétique, d'un réfrigérant, et d'un bain d'huile. On ajoute 10 cm3 d'anhydride acétique distillé sous vide et 1,36 g d'acétate de sodium. Le tout est porté à 120°C sous agitation magnétique et laissé à cette température pendant 1 h 15.

Le polymère est ensuite dissous dans le chloroforme, puis précipité dans le méthanol et séché sous vide jusqu'à masse constante. On procède alors à une analyse du polymère obtenu par spectrométrie infrarouge, spectrométrie RMN et DSC.

Le spectre infrarouge est identique à celui d'un copolymère 50/50 préparé à partir de styrène et de N-cyclohexylmaléimide (NCHMI).

Le spectre RMN du produit est exactement identique à celui obtenu par copolymérisation radicalaire du styrène et du NCHMI dans une proportion 50/50.

Le spectre DSC révèle un polymère amorphe de Tg égale à 226°C.

Deuxième méthode

La cyclisation est ici réalisée grâce à une déshydratation du poly-acide-amide obtenu à l'aide de chlorure d'oxalyle.

L'avantage de cette méthode est que lors de la réaction, des produits volatils sont formés et que donc le polymère final est dépourvu d'impuretés.

1 g de polymère est donc introduit dans 35 cm3 de toluène sous azote, et 0,63 g de chlorure d'oxalyle sont ajoutés.

Le chlorure d'oxalyle est ajouté lentement à l'aide d'une seringue à température ambiante. Lors de l'addition on observe un important dégagement gazeux qui dure quelques minutes puis se calme. On chauffe alors le mélange réactionnel de manière progressive jusqu'à 70°C environ, un léger courant d'azote étant toujours établi. La température est alors maintenue 3 heures, puis on l'augmente à 80°C pendant 15 heures environ. On note que le polymère se dissout à chaud dans le toluène en cours de réaction. La solution est alors refroidie jusqu'à la température ambiante, et le polymère précipite. On le filtre, on le redissout dans le chloroforme, puis on le précipite dans le méthanol et on le sèche jusqu'à masse constante.

Le spectre infrarouge obtenu révèle que le copolymère obtenu possède une grande majorité de motifs maléimides.

Un dernier traitement réalisé avec de la triéthylamine à 10 % dans le méthanol permet de transformer les quelques motifs éventuellement formés d'isomaléimides et de chlorures d'acides, respectivement en maléimides et en motifs esters. Cette réaction peut être suivie grâce notamment au spectre infrarouge où l'on voit disparaître les deux bandes à 1825 et 1780 $cm^{-1}$, et apparaître un épaulement correspondant au groupement C=O de l'ester, à 1730 $cm^{-1}$.

Le spectre infrarouge obtenu sur ce copolymère final est comparé avec celui d'un copolymère styrène-NCHMI 50/50 préparé par voie radicalaire. Toutes les bandes caractéristiques se retrouvent. La température de transition vitreuse Tg du matériau obtenu est de 220°C avant le traitement complémentaire à la triéthylamine dans le méthanol, et de 221°C à l'issue de ce traitement.

Réaction avec l'isopropylamine

Le procédé de préparation décrit précédemment a été reproduit en remplaçant la cyclohexylamine par l'isopropylamine. La réaction de cyclisation a été effectuée par déshydratation à l'aide de chlorure d'oxalyle.

Les températures de transition vitreuse mesurées sur les polymères obtenus à l'issue de différentes étapes du procédé ont été de :

- 209°C pour le copolymère obtenu à la fin de la réaction de copolymérisation radicalaire,
- 196°C pour le copolymère ayant réagi avec l'isopropylamine,
- 198°C pour le copolymère obtenu après action du chlorure d'oxalyle à 80°C pendant 15 heures,
- 201°C pour le copolymère obtenu après traitement complémentaire à l'aide de la triéthylamine dans le méthanol à 60°C pendant 5 heures.

**EXEMPLE 2**

Cet exemple est relatif à la préparation de matériaux polymériques à partir de terpolymère styrène, anhydride maléique et méthacrylate de méthyle, la proportion de ce dernier étant progressivement augmentée.

Les conditions de température sont proches de celles de l'exemple précédent.

Les différents mélanges de monomères dont les compositions figurent dans le tableau 1 sont polymérisés par chauffage à 80°C dans 150 $cm^3$ de toluène en présence de 0,05 g de peroxyde de benzoyle.

Au cours de la réaction qui dure 18 heures, le polymère formé précipite spontanément. Après refroidissement et séchage, 3 g de chaque terpolymère ainsi obtenu sont traités dans 50 $cm^3$ de toluène par 0,88 g d'isopropylamine ajoutés à 30°C, puis le milieu réactionnel est porté à 60°C pour 5 heures.

Le bon déroulement de l'opération est contrôlé sur le spectre IR du produit obtenu.

Chacun des polymères acide-amide obtenu est traité à l'échelle d'un gramme par 0,53 g de chlorure d'oxalyle dans 15 $cm^3$ de toluène et porté à 80°C pendant 18 heures. On note qu'au cours de cette réaction de cyclisation les différents polymères préparés se redissolvent, et il est donc nécessaire en fin de manipulation de concentrer le milieu réactionnel avant de précipiter les polymères dans le méthanol. La température de transition vitreuse des polymères a ensuite été mesurée par DSC. Le tableau 1 ci-après présente les résultats obtenus. On peut observer que dans tous les cas on obtient des valeurs de Tg élevées, supérieures à 150°C. On note également que l'introduction en proportion croissante de méthacrylate de méthyle dans le mélange de monomères de départ, pour les concentrations choisies, fait diminuer de manière linéaire la température de transition vitreuse du terpolymère final, permettant ainsi de pouvoir ajuster la tenue en température du matériau final.

TABLEAU 1

| Composition du mélange de monomères de départ | | | | Tg du produit final (°C) |
|---|---|---|---|---|
| N° | MMA (g) | Styrène (g) | Anhydride maléique (g) | |
| 1 | 0,24 | 5,0 | 4,74 | 202,3 |
| 2 | 0,47 | 4,91 | 4,62 | 197,9 |
| 3 | 0,89 | 4,69 | 4,42 | 190,2 |
| 4 | 1,29 | 4,48 | 4,23 | 189,1 |
| 5 | 1,65 | 4,30 | 4,05 | 181,5 |
| 6 | 2,28 | 3,97 | 3,75 | 176,5 |
| 7 | 2,58 | 3,82 | 3,60 | 171,9 |
| 8 | 2,84 | 3,67 | 3,47 | 167,0 |
| 9 | 3,31 | 3,44 | 3,25 | 159,2 |

**EXEMPLE 3**

Cet exemple illustre l'influence du groupement alkyle ou aryle de l'amine primaire utilisée sur la température de transition vitreuse du produit obtenu.

10 g d'un mélange de monomères dans les proportions de la composition n° 9 du tableau 1 (soit 33,3 % en moles de chaque monomère) sont polymérisés par chauffage pendant 18 heures dans 150 $cm^3$ de toluène contenant 0,05 g de peroxyde de benzoyle.

Après refroidissement, filtration et séchage, trois échantillons de 1 gramme chacun sont modifiés à 60°C dans 15 $cm^3$ de toluène en présence de trois amines différentes : cyclohexylamine, isopropylamine et n-butylamine dans les proportions du tableau 2. Chaque polymère modifié subit ensuite une déshydratation par 0,63 g de chlorure d'oxalyle dans 15 $cm^3$ de toluène porté à 80°C pour 18 heures. Après récupération des polymères obtenus, la température de transition vitreuse a été mesurée par DSC et le tableau 2 ci-après présente les résultats obtenus.

TABLEAU 2

| Composition du mélange de monomères | | | Amine employée | Tg du matériau final |
|---|---|---|---|---|
| MMA | Styrène | Anhydride maléique | Nom (g/g*) | |
| 33,3 | 33 | 33,3 | Cyclohexyle 0,39 | 177°C |
| 33,3 | 33,3 | 33,3 | Isopropyle 0,29 | 159°C |
| 33,3 | 33,3 | 33,3 | n-butyle 0,32 | 140°C |

* quantité d'amine employée par gramme de terpolymère.

On peut noter que la nature du groupement substitué sur l'amine exerce une influence directe sur la Tg du matériau obtenu.

**EXEMPLE 4**

Cet exemple illustre la réalisation de l'étape de cyclisation par traitement thermique, afin de conduire à la formation des cycles imides. La composition n° 9 du tableau 1 a été reprise pour réaliser dans les conditions citées à l'exemple n°3, le terpolymère initial. Après filtration et séchage, des échantillons de 2 grammes de ce polymère ont été traités respectivement par 0,79 g de cyclohexylamine et 0,59 g d'isopropylamine dans 30 $cm^3$ de toluène pendant 5 heures à 60°C. Les polymères ainsi modifiés sont soumis à un traitement thermique, celui-ci étant réalisé dans une étuve à l'intérieur de laquelle circule un flux d'azote exempt de traces d'eau afin d'éviter la reformation de cycles anhydrides. Le tableau 3 présente les résultats obtenus, le traitement thermique étant réalisé à une température de 230°C pendant 20 minutes pour le terpolymère modifié à la cyclohexylamine et de 220°C pendant 20 minutes pour le terpolymère modifié à l'isopropylamine.

Ce tableau présente également la température de transition vitreuse mesurée sur le matériau correspondant, cyclisé à l'aide du traitement chimique.

On peut observer que les températures obtenues à l'aide des deux traitements sont très voisines.

La réaction de cyclisation thermique peut être réalisée de façon tout à fait satisfaisante par passage du polymère en poudre dans une extrudeuse à simple ou double vis munie d'un évent de dégazage.

TABLEAU 3

| Composition du mélange de monomères (% mole) | | | Amine primaire utilisée R-$NH_2$ | Traitement thermique | | Tg°C) produit final (therm.) | Tg (°C) traitement chimique |
|---|---|---|---|---|---|---|---|
| MMA | Styrène | Anhy.maléique | | Temps | Température | | |
| 33.3 | 33.3 | 33.3 | Cyclohexylamine 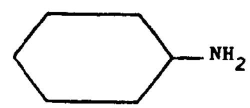 | 20 mn | 230°C | 177 | 177 |
| 33.3 | 33.3 | 33.3 | Isopropylamine 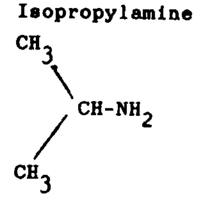 | 20 mn | 220°C | 157 | 159 |

**EXEMPLE 5**

Cet exemple illustre la réalisation de l'étape de cyclisation thermique dans une extrudeuse monovis de diamètre 16 mm.

Les différents terpolymères sont introduits sous forme de poudre compactée dans la zone d'alimentation de l'extrudeuse et portés à différentes températures d'extrusion.

Le tableau 4 ci-après présente les résultats obtenus.

On peut noter que le spectre infrarouge obtenu à partir du matériau final n° 9 présente le pic situé à 1 697 $cm^{-1}$ caractéristique des groupements succinimides provenant de la cyclisation en imides du poly(acide-amide).

Les terpolymères obtenus à partir des compositions 10 et 11 présentent un spectre infrarouge qui fait apparaître en plus un épaulement situé vers 1 670 $cm^{-1}$ caractéristique des groupements glutarimides.

Il est donc probable que les matériaux obtenus par traitement thermique contiennent à la fois des motifs succinimides et des motifs glutarimides provenant respectivement de la cyclisation de l'acide-amide dérivé du motif anhydride (ex.: l'anhydride maléique) et de l'interaction d'un groupe amide avec un motif ester voisin (ex.: méthacrylate de méthyle) ou d'une mole d'amine employée en excès (contenue sous forme de sel de l'acide) avec deux motifs méthacrylate de méthyle consécutifs.

L'importance de cette dernière réaction augmente vraisemblablement avec la température d'extrusion, ce qui contribue à élever la température de transition vitreuse du matériau final (composition 11).

TABLEAU 4

| N° | Composition du mélange de monomères en % en mole | | | Amines employées en (g/g de terpolymère) | | Température extrusion (°C) | Tg (°C) |
|---|---|---|---|---|---|---|---|
| | MMA | Styrène | Anhydride maléique | Cyclohexyl amine | Isopropyl amine | | |
| 9 | 33,3 | 33,3 | 33,3 | - | 0,27 | 200<br>210<br>220<br>230 | 161<br>162<br>157<br>162 |
| 10 | 55,5 | 22,2 | 22,2 | 0,66 | - | 240<br>250<br>260<br>270 | 171<br>171<br>171<br>171 |
| 11 | 62,5 | 12,5 | 25 | 0,49 | - | 230<br>240<br>250<br>260 | 178<br>181<br>182<br>186 |

## Revendications

1. Procédé de fabrication de matériau thermoplastique ayant une température de transition vitreuse élevée, caractérisé par le fait que l'on prépare un polymère de départ présentant parmi ses motifs constitutifs des motifs anhydrides, que l'on fait réagir une quantité suffisante d'amine primaire ou d'un mélange d'amines primaires pour que les motifs anhydrides soient transformés au moins en partie en motifs acide-amide, et que l'on effectue la cyclisation du poly-acide-amide obtenu.

2. Procédé selon la revendication 1, caractérisé par le fait que l'amine primaire est substituée ou que le mélange d'amines primaires comprend au moins une amine substituée.

3. Procédé selon l'une des revendications 1 et 2, caractérisé par le fait que le polymère de départ est un polymère à base d'anhydride maléique.

4. Procédé selon la revendication 3, caractérisé par le fait que le polymère de départ est un copolymère d'anhydride maléique et d'ester acrylique ou méthacrylique, éventuellement fluoré ou chloré ou un copolymère d'anhydride maléique et de monomère vinylique.

5. Procédé selon l'une des revendications 3 et 4, caractérisé par le fait que le polymère de départ est un terpolymère d'anhydride maléique, d'ester acrylique ou méthacrylique, éventuellement fluoré ou chloré, et de monomère vinylique.

6. Procédé selon l'une quelconque des revendications 1 à 5, caractérisé par le fait que l'anhydride maléique est présent dans le polymère de départ ou une proportion supérieure à 5 %, de préférence supérieure à 10 %.

7. Procédé selon l'une quelconque des revendications 1 à 6, caractérisé par le fait que la cyclisation est effectuée par voie chimique.

8. Procédé selon l'une quelconque des revendications 1 à 7, caractérisé par le fait que la cyclisation est effectuée par voie thermique, de préférence sous atmosphère inerte.

9. Matériau thermoplastique susceptible d'être obtenu par le procédé selon l'une quelconque des revendications 1 à 8.

10. Utilisation du matériau thermoplastique obtenu par le procédé selon l'une quelconque des revendications 1 à 8 comme matériau thermoplastique transparent résistant à haute température.

Office européen des brevets

# RAPPORT DE RECHERCHE EUROPEENNE

Numero de la demande

EP 92 40 0469

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | US-A-2 921 928 (J. E. FIELDS)<br>* colonne 2; revendication 1 * | 1-10 | C08F8/48 |
| D,Y | EP-A-0 269 223 (TORAY INDUSTRIES)<br>* revendications 1-16 * | 1-10 | |
| Y | CHEMICAL ABSTRACTS, vol. 103, no. 24, Décembre 1985, Columbus, Ohio, US;<br>abstract no. 196581C, 'CYCLIC IMIDE-CONTAINING POLYMERS'<br>page 12 ;colonne 1 ;<br>& JP-A-60058409 (MITSUBISHI RAYON CO., LTD.) 04-04-1985<br>* abrégé * | 1-10 | |
| A | CHEMICAL ABSTRACTS, vol. 102, no. 4, Janvier 1985, Columbus, Ohio, US;<br>abstract no. 25165V, ,<br>C. T. ANDRADE: 'PREPARATION AND CHARACTERIZATION OF ACID-AMIDE AND ACID-AMIDE-IMIDE COPOLYMERS FROM POLY(METHACRYLIC ACID)'<br>page 8 ;colonne 2 ;<br>& AN. ACAD. BRAS. CIENC. 1984, 56(3), 253-9<br>* abrégé * | 1 | **DOMAINES TECHNIQUES RECHERCHES (Int. Cl.5 )**<br>C08F |
| A | PATENT ABSTRACTS OF JAPAN<br>vol. 8, no. 266 (C-255)(1703) 6 Décembre 1984<br>& JP-A-59 140 212 ( TORAY K.K. ) 11 Août 1984<br>* abrégé * | 1 | |

Le présent rapport a été établi pour toutes les revendications

| Lieu de la recherche | Date d'achèvement de la recherche | Examinateur |
|---|---|---|
| LA HAYE | 28 AVRIL 1992 | PERMENTIER W.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)